# FASCICULE DE BREVET EUROPEEN

(11) **EP 2 406 355 B1**
(45) Date de publication et mention de la délivrance du brevet: **02.05.2018**
(21) Numéro de dépôt: 10716381.8
(22) Date de dépôt: 11.03.2010
(51) Int. Cl.: C10M 101/02, C10M 107/02, C08K 5/01, C08K 5/09, C08K 5/101, C08L 83/04, C09D 127/06, C09J 183/04, C10G 9/00, C10G 11/00, C10G 45/58, C10G 47/00

(54) **COMPOSITION COMPRENANT UN DILUANT HYDROCARBONE A BAS TAUX DE COV POUR MATERIAUX DE CONSTRUCTION**
ZUSAMMENSETZUNG ENTHALTEND EIN LOW-VOC-KOHLENWASSERSTOFFVERDÜNNUNGSMITTEL FÜR BAUSTOFFE
COMPOSITION COMPRISING A LOW VOC HYDROCARBON DILUENT FOR CONSTRUCTION MATERIALS

(30) Priorité: 12.03.2009 FR 0901157
(43) Date de publication de la demande: 18.01.2012
(73) Titulaire: TOTAL MARKETING SERVICES, 92800 Puteaux (FR)
(72) Inventeur: WESTELYNCK, Antoine, 78440 Brueil en Vexin (FR)
(74) Mandataire: Hirsch & Associés
(86) Numéro de dépôt international: PCT/FR2010/050425
(87) Numéro de publication internationale: WO 2010/103244

(56) Documents cités:
- US-A1- 2001 021 747
- US-A1- 2005 197 256
- US-A1- 2009 014 354
- US-B1- 7 442 739
- IDEMITSU KOSAN CO., LTD (CHEMICALS DEPT): "IDEMITSU IP Solvent" INTERNET ARTICLE, [Online] pages 1-15, XP002549391 Extrait de l'Internet: URL:http://www.idemitsu-chemicals.de/files /datasheets/broschures/PerformanceChemical s/IPSolvent.pdf> [extrait le 2009-10-08]

## Description

La présente invention concerne une composition de polymère ou de résine diluée comprenant un diluant hydrocarboné à bas taux de COV pour utilisation dans les matériaux de construction notamment dans les compositions et matériaux à base de résines et les mastics. Elle concerne également les composition et matériaux de construction contenant ce diluant.

De nombreux produits sont utilisés dans les matériaux de construction, par exemple pour les revêtements de sols, les peintures, les papiers peints et les mastics pour les fenêtres ou les joints de sanitaires. Ils sont constitués en général d'un ou deux composants actifs dont la viscosité est ajustée pour l'application visée par l'ajout d'un diluant. Ces diluants sont mélangés à au moins une résine, un polymère et/ou tout autre pâte de viscosité élevée et ont tendance soit tout de suite, soit avec le temps à s'évaporer et/ou se dégrader et à être une source d'émissions souvent toxiques pour l'environnement et plus particulièrement pour les santés humaine et animale. Ces émissions sont appelées des émissions de COV (ou composés organiques volatils - VOC en anglais). Ces émissions environnant la vie de tous les jours constituent une source importante de pollution intérieure des habitations, des bureaux et des administrations et de tout espace enfermé dont l'aération est limitée en tout cas non ouverte directement à la circulation d'air. Ces émissions peuvent être majeures au moment de la pose mais il peut également y avoir un effet à plus long terme par une volatilité rémanente en fonction du temps ou même liée à la dégradation progressive du revêtement ou de la composition adhésive ou du mastic. L'inconvénient de ces matériaux dépend de la quantité de matériaux utilisés, de la ventilation du local où il est utilisé et de l'environnement de travail le temps de sa mise en place.

Les émissions résultant des matériaux de construction sont liées notamment à la nature et à l'émissivité des diluants utilisés dans ces matériaux. Ces diluants visant la réduction de viscosité momentanée des matériaux sont classés en au moins trois types de composés qui résultent de différents schémas nationaux ou internationaux aboutissant à l'attribution d'un label ou définissant les limites d'émissions acceptables pour ces produits : ce sont par exemple AgBB et Blauer Engel en Allemagne, M1 en Finlande, le label « Danish Indoor Climate label » ou DICL au Danemark, Emicode, Oeko-Tex, Greenguard ou encore le protocole de l'AFSSET (Agence Française de Sécurité Sanitaire de l'Environnement et du Travail) en France. Le regroupement des caractéristiques de ces produits VOC tels que définis par l'Organisation Mondiale de la Santé et repris dans la norme ISO 16000-6 a permis d'établir la classification reprise dans le tableau 1 ci-après:

**TABLEAU 1**

| | Température ébullition (°C) ISO 16000-6 | Pression (kPa) ISO 16000-6 | longueur des chaînes hydrocarbonées |
|---|---|---|---|
| Very VOC ou VVOC | <0°C à 50-100°C | >15 kPa | < C6 |
| VOC | 50/100°C à 240/260°C | >100kPa | C6 à C16 |
| Semi VOC | 240/260°C à 380/400°C | 0.02 à 10-8 kPa | C16 à C22 |

US 2001/0021747 décrit une composition d'agent de ramollissement des caoutchoucs obtenue par mélange et chauffage de :
a) 100 parties en poids d'au moins un agent de ramollissement qui est un hydrocarbure non aromatique ;
b) de 0,1 à 10 parties en poids d'un peroxyde ; et
c) de 0,1 à 50 parties d'un agent de réticulation ; le rapport b : c étant inférieur à 1.

La composition d'agent de ramollissement est considérée comme utile dans la fabrication d'une composition de résine thermoplastique.

US 2005/0197256 décrit une méthode pour fabriquer des hydrocarbures de faible toxicité convenant dans un fluide de forage, ladite méthode comprenant les étapes de :
- dimerisation, trimerisation ou oligomérisation d'oléfines à l'aide d'un catalyseur de type zéolite ;
- hydrogénation des oléfines dimérisées, trimérisées ou oligomérisées ;
- distillation fractionnée de la composition hydrogénée ;
- collecte d'une fraction d'hydrocarbures ayant un point d'ébullition supérieur à environ 280°C et inférieur à environ 320°C et ayant une toxicité par sédimentation vis-à-vis de *Leptocheirus plumulosus* caractérisée par une concentration léthale médiane (LC₅₀) selon la directive ASTM E 1367, EPA 600/R-94/025, de plus d'environ 500 mg/kg, dans laquelle la fraction d'hydrocarbures comprend des hydrocarbures de faible toxicité par sédimentation.

US 7442739 décrit une composition d'adhésif fondu à chaud sous pression comprenant :
- environ 10 à environ 50% en poids de polymère,
- environ 5 à environ 50% d'huile isoparaffinique et
- environ 30 à environ 65% d'une résine collante.

US 2009/0014354 décrit un procédé de fabrication de lubrifiants à partir de cétones, d'aldéhydes, d'alcools, d'acides organiques, d'esters d'acides carboxyliques, d'anhydrides d'acide carboxylique, d'alphaoléfines et de sels métalliques d'acides carboxyliques, des composés sulfurés correspondants et des composés azotés correspondants. Ce procédé réalise la condensation de ces produits, suivie d'une étape d'hydrodéfonctionalisation et d'une étape d'isomérisation.

Dans le cadre de la présente invention, il est recherché des diluants hydrocarbonés qui présentent une faible émissivité, type bas COV, capables de préserver les propriétés fondamentales des matériaux de construction, type revêtement de sols, adhésifs ou mastics, c'est-à-dire la stabilité du matériau avant et après sa mise en place, son vieillissement, ses propriétés mécaniques, son aspect initial, etc.....

Pour les pâtes PVC utilisées dans le revêtement de sols, il est connu d'utiliser différents types de solvants hydrocarbonés tels que les white spirits, le kérosène, des isoparaffines ou du gasoil : ces composés permettent d'obtenir des propriétés rhéologiques spécifiques nécessaires à l'application du produit et une diminution de la viscosité de la pâte PVC.
Cependant, aucun de ces produits ne présente des caractéristiques satisfaisant les exigences requises pour limiter le taux d'émission en matières volatiles VOC, semi VOC ou very VOC.

Pour satisfaire à la fois les réductions de viscosité et maintenir les propriétés nécessaires à l'application de ces pâtes PVC ou ces mastics, les brevets WO02/086007 et WO2008/033899 proposent l'utilisation d'esters d'acides gras issus d'huiles végétales ou ces huiles elles-mêmes pris en mélange avec des composés mouillants et dispersants dont l'émissivité est nulle et qui maintiennent certaines de propriétés attendues du matériau final. Le brevet WO2004/009738 propose l'utilisation de coupes issues de la transformation du gaz par le procédé Fisher Tropsch par Hydrocraquage/hydro-isomérisation de celles-ci comme diluant pour caoutchoucs à base de silicone.

La présente invention a pour but d'utiliser dans les matériaux de construction notamment les PVC utilisés dans les revêtements de sol et les mastics des diluants qui ne sont pas d'origine renouvelable, mais d'origine fossile qui permettent de diminuer la viscosité des matériaux afin de faciliter leur manipulation et leur mise en place mais qui concomitamment permettent de maintenir les propriétés physiques requises pour ces matériaux et leur usage long terme. In fine, les produits finis utilisant ces diluants selon l'invention doivent passer les exigences non COV des protocoles tels que Afsset, AgBB, Blauer Engel, Emicode, Oeko-Tex ou Greenguard.

La présente invention a donc pour objet une composition de polymère ou de résine diluée comprenant un diluant tel que défini dans la revendication 1.

On entend par « à faible émission de COV », les diluants qui en mélange dans les matériaux de construction, par exemple des revêtements ou des mastics passent les exigences des schémas d'évaluation tels que AgBB, Blauer Engel, Emicode, Oeko-Tex, Greenguard ou AFSSET.

De tels diluants combinent les avantages d'atteindre des caractéristiques de produits finaux identiques à ceux initialement fabriqués avec des diluants semi VOC, VOC ou very VOC, avec ceux de disposer d'une volatilité très faible, inférieure aux produits de l'art antérieur.

De préférence, les diluants sont choisis parmi les coupes hydrocarbonées hydrodéparaffinées dont la viscosité à 40°C selon la norme ASTM D445 est supérieure à 5 mm²/s, plus particulièrement les coupes de viscosité supérieure à 7mm²/s à 40°C.

Les coupes hydrocarbonées hydrodéparaffinées choisies sont issues de l'hydrodéparaffinage de différentes coupes gazoles obtenues par distillation atmosphérique, distillation sous vide, hydrotraitement, hydrocraquage, craquage catalytique et/ou viscoréduction, éventuellement après traitement de désulfuration et/ou de désaromatisation complémentaire. On pourra désigner ce diluant hydrocarboné dans la suite de la présente description sous le vocable diluant hydrodéparaffiné.

Pour certaines des applications de l'invention, ces coupes peuvent présenter des intervalles de distillation larges de plus de 50°C dans l'intervalle 280°C-450°C, ou des coupes plus étroites.

Ainsi dans un mode préféré de l'invention, le diluant est issu d'une coupe de distillation d'hydrocarbures hydrodéparaffinés de point d'écoulement selon la norme ASTM D97 inférieur à -30°C. Parallèlement, le point éclair de ces composés selon l'invention est très haut, supérieur à 140°C. L'obtention d'un point d'écoulement très bas favorise le maintien du diluant dans un mélange, par exemple avec des résines PVC ou des polymères pour mastics, et limite, voire empêche le ressuage de celui-ci. L'absence de ressuage est particulièrement recherchée à basse température.

Les diluants sont en outre constitués d'une majorité d'isoparaffines et d'une minorité de normales paraffines. De préférence, ces diluants sont obtenus à partir d'hydrocarbures ayant été fortement hydrodéparaffinés et donc contiennent plus de 65% en poids d'isoparaffines et moins de 10 % en poids de normales paraffines. La présence de naphtènes dans leur composition les distingue d'autres produits constitués seulement d'isoparaffines et de paraffines qui sont utilisés dans les mêmes applications. Ces diluants hydrodéparaffinés contiendront au moins 20% en poids de naphtènes. Typiquement, dans le cadre de la présente invention, on préfère des diluants dont la teneur en naphtènes varie de 20 à 35% en poids du diluant.

Plus généralement, les diluants sont obtenus à partir d'hydrocarbures de longueurs de chaînes majoritairement supérieures à 16 atomes de carbone. Ainsi, ce diluant est composé de moins de 65% en poids d'hydrocarbures ayant une longueur de chaîne comprise entre 16 et 22 atomes de carbone connus comme étant des hydrocarbures semi-VOC, et plus de 30% en poids d'hydrocarbures ayant une longueur de chaîne supérieure à 22 atomes de carbone non VOC, car pas ou peu volatil. Dans un mode préféré, le diluant est composé de moins de 50% en poids d'hydrocarbures ayant une longueur de chaîne comprise entre 16 et 22 atomes de carbone, et plus de 40% en poids d'hydrocarbures ayant une longueur de chaîne supérieure à 22 atomes de carbone. Ces hydrocarbures de chaînes supérieures à C22 correspondent à des hydrocarbures contenant des chaînes de C23 à C30 au maximum, et ceci afin de préserver la compatibilité avec les polymères qui se dégrade lorsque le poids moléculaire augmente.

En outre, ces diluants comprennent moins de 10 ppm de soufre, de préférence moins de 2 ppm de soufre. Leur teneur en aromatique est inférieure à 500ppm.

Comme ces diluants peuvent être mis en mélange avec d'autres composés, il est décrit une composition de
diluants à faible émission de COV. Cette composition, comprend principalement des hydrocarbures hydrodéparaffinés comme décrits ci-dessus mais aussi des hydrocarbures constitués des diluants classiques tels que les acides et esters d'acides gras de chaînes carbonées de plus de 16 atomes de carbone, des coupes de type gazole hydrotraitées et/ou hydrocraquées de point d'ébullition compris entre 280 et 450°C. Bien entendu, l'intervalle de coupe retenu pour ces diluants classiques sera adapté par l'homme du métier au diluant principal hydrodéparaffiné à bas COV. Les mélanges ainsi préparés pour obtenir des compositions diluantes à bas COV contiendront plus de 50% en poids d'isoparaffines et moins de 20% en poids de normales paraffines. Le taux de naphtènes présent sera compris entre 10 et 30% en poids.

Les compositions diluantes préférées comprendront plus de 60% en poids d'isoparaffines et moins de 10% en poids de normales paraffines, la différence étant constituée des naphtènes présents. La composition diluante comprendra plus de 40 % en poids de diluant hydrodéparaffiné, et de manière préférentielle plus de 60% en poids.

Comme pour le diluant seul, la composition comprendra moins de 65% en poids d'hydrocarbures ayant une longueur de chaîne comprise entre 16 et 22 atomes de carbone, et plus de 30% en poids d'hydrocarbures ayant une longueur de chaîne supérieure à 22 atomes de carbone.

Les diluants utilisés seuls ou en combinaison avec un diluant classique ne modifient aucune des caractéristiques physiques des formulations de résines dans lesquelles ils sont utilisés, notamment la stabilité thermique, les propriétés optiques et mécaniques et la volatilité à 70°C du produit fini. En outre, les émissions de COV des produits finis les contenant passent les exigences AgBB, Blau Engel, Emicode, Oeko-Tex, Greenguard ou Afsset.

On entend ici par résines des résines PVC qui sont introduites dans les pâtes PVC (ou Plastisols) utilisées dans la fabrication de revêtements de sols, d'enduits pour fils ou textiles, de papiers peints, de films souples, de bâches, de mastics, etc .... Ces pâtes sont obtenues par homopolymérisation de polychlorure de vinyle ou PVC, ou polymérisation de PVC avec un comonomère par exemple des lactones ou encore d'autres oléfines susceptibles de se polymériser avec le chlorure de vinyle et entrant dans la composition de ces résines.

On entend en outre par mastics des compositions à base de polymères ou résines associés à d'autres composés connus de l'homme du métier, tels que plastifiants, charges et diluant permettant l'ajustement de la viscosité.

La composition selon l'invention comprend le diluant hydrodéparaffiné seul ou en combinaison avec un diluant classique et un mastic ou un adhésif à base de silicone (par exemple mastics silicone RTV-1 (Room Temperature vulcanisable - 1 component ou en français : mastics réticulables à température ambiante - mono composant) ou de polymères silicones modifiés (SMP : Silane Modified Polymers), par exemple de type ST-PE (Silane Terminated - Poly Ether ou Polyether à terminaison Silane en français) ou MS polymer (MS=modified silane ou silane modifié en français) ou ST-PU (Silane Terminated Poly Urethane ou Polyurethane à terminaison Silane en français)). Ces polymères sont mélangés à tout autre composé connu de l'homme du métier, tel que plastifiants, charges minérales, additifs, promoteur d'adhésion, catalyseur, etc....

L'invention peut donc se définir par les caractéristiques suivantes :
Elle met en oeuvre un diluant hydrocarboné pour dilution de polymère de point d'écoulement inférieur à -15°C selon la norme ASTM D97, comprenant plus de 50% en poids d'isoparaffines et des naphtènes de 20% à 40% en poids, et constitué d'un mélange hydrocarbures de température d'ébullition comprise entre 280 et 450°C, obtenu par distillation de coupes gazoles hydrodéparaffinées d'origine fossile.

Ce diluant a une température d'ébullition comprise entre 280 et 450°C.

Ce diluant a de préférence un point d'écoulement inférieur à - 30°C selon la norme ASTM D 97.

Ce diluant a de préférence une viscosité supérieure à 5 mm²/s à 40°C, et notamment supérieure à 7mm²/s à 40°C, selon la norme ASTM D445.

Ce diluant est de préférence issu d'hydrocarbures hydrodéparaffinés, notamment de l'hydrodéparaffinage de différentes coupes gazoles obtenues par distillation atmosphérique, distillation sous vide, hydrotraitement, hydrocraquage, craquage catalytique et/ou viscoréduction, ou éventuellement après traitement de désulfuration et/ou de désaromatisation complémentaire.

Ce diluant est de préférence issu d'une coupe de distillation d'hydrocarbures hydrodéparaffinés de point d'écoulement selon la norme ASTM D97 inférieur à -30°C et de point éclair supérieur à 140°C.

Ce diluant comprend de préférence de 20 à 35% en poids de naphtènes et plus de 60% en poids d'isoparaffines.

Ce diluant comprend de préférence plus de 65 % en poids d'isoparaffines et moins de 10 % en poids de normales paraffines.

Ce diluant comprend de préférence moins de 65% en poids d'hydrocarbures ayant une longueur de chaîne comprise entre 16 et 22 atomes de carbone, et plus de 30% en poids d'hydrocarbures ayant une longueur de chaîne supérieure à 22 atomes de carbone, de préférence de C23 à C30.

Ce diluant comprend de préférence moins de 50% en poids d'hydrocarbures ayant une longueur de chaîne comprise entre 16 et 22 atomes de carbone, et plus de 40% en poids d'hydrocarbures ayant une longueur de chaîne supérieure à 22 atomes de carbone, de préférence de C23 à C30.

Ce diluant est de préférence dépourvu de normales paraffines

Sa teneur en soufre est de préférence inférieure à 10 ppm, notamment inférieure à 2 ppm.

Il contient de préférence moins de 500 ppm d'aromatiques, mesurés par spectromètrie UV.

L'invention met en oeuvre aussi une composition de diluants comprenant le diluant décrit plus haut en combinaison avec au moins un diluant dit « classique », par exemple appartenant au groupe constitué par les acides et esters d'acides gras de chaînes carbonées de plus de 16 atomes de carbone, des coupes de type gazole hydrocraquées et/ou hydrotraitées de point d'ébullition compris entre 200 et 450°C, notamment entre 280 et 450°C, ou entre 200 et 300°C.

Cette composition comprend de préférence plus de 50% en poids d'isoparaffines et moins de 20% en poids de normales paraffines, de préférence plus de 60% en poids d'isoparaffines et moins de 10% en poids de normales paraffines.

Cette composition comprend de préférence plus de 40 % en poids de diluant hydrodéparaffiné, de préférence plus de 60% en poids.

L'invention concerne également l'utilisation de la composition telle que décrite précédemment, le diluant étant seul ou en combinaison avec au moins un diluant appartenant au groupe constitué par les acides et esters d'acides gras de chaînes carbonées de plus de 16 atomes de carbone, des coupes de type gazole hydrotraitées et/ou hydrocraquées de point d'ébullition compris entre 200 et 450°C, notamment entre 280 et 450°C, dans des adhésifs, des revêtements de sols, des papiers peints.

Les avantages de la présente invention sont décrits dans les exemples donnés ci-après à titre illustratif mais non limitatif de l'invention.

### EXEMPLE 1

Le présent exemple décrit les différents diluants utilisés comprenant ceux de l'art antérieur, référencés Ti et ceux de l'invention référencés Di et leur utilisation comparée dans des formulations de pâte PVC.

Ce sont pour les diluants de l'art antérieur, le White spirit (T1), Le kérosène (T2), le dodécylbenzène (T3) et enfin une coupe gazole hydrocraquée (T4) de coupe 300°C et plus. Pour les diluants de l'invention, ce sont deux produits issus de la distillation d'une coupe hydrodéparaffinée 280-450°C, D1 correspondant à une coupe 290-380°C et D2 à une coupe distillant à plus de 340°C. Un troisième diluant D3 correspond au mélange de 70% poids de diluant D1 avec 30% de T4.

Le tableau 1 ci-après regroupe les caractéristiques de tous les diluants testés.

**TABLEAU 1**

| | **Méthode d'essai** | **Unité** | **T1** | **T2** | **T3** | **T4** | **D1** | **D2** | **D3** |
|---|---|---|---|---|---|---|---|---|---|
| | | | | | | | | | |
| **Point initial de distillation** | **ASTM D86** | °**C** | 182 | 233 | 280 | 305 | 289 | 334 | 295 |
| **Point final de distillation** | **ASTM D86** | °**C** | 216 | 264 | 310 | 347 | 373 | 378 | 380 |
| **Intervalle de distillation** | | °**C** | 34 | 31 | 30 | 42 | 84 | 44 | 85 |
| | | | | | | | | | |
| **Viscosité à 20°C** | **ASTM D445** | **mm²/s** | 1,7 | 3,3 | | 11 | 17,7 | 21,4 | 13,0 |
| **Viscosité à 40°C** | **ASTM D445** | **mm²/s** | | 2,3 | 5,5 | 6,1 | 7,7 | 10,6 | 7,1 |
| **Point d'écoulement** | **ASTM D97** | °**C** | <-30 | <-20 | | -2 | -42 | -35 | -18 |
| Point Éclair | ASTM D93 | °C | 65 | 103 | | 159 | 149 | 175 | 151 |
| | | | | | | | | | |
| **répartition des carbones** | **ASTM D2887** | **%pds** | | | | | | | |
| <C16 | | | 100 | 94 | 0 | 0 | 8,0 | 0,5 | 4,1 |
| C16-C22 | | | 0 | 6 | 100 | 90,1 | 48,8 | 20,7 | 62,8 |
| >C22 | | | 0 | 0 | 0 | 9,9 | 43.2 | 78,8 | 33,1 |
| | | | | | | | | | |
| **Composition** | **GC MS** | **%pds** | | | | | | | |
| isoalcanes | | | 24,9 | 30,5 | 0 | 59,0 | 73,1 | 65,7 | 69,5 |
| n alcanes | | | 21,3 | 24,0 | 0 | 8,3 | 0 | 0 | 5,5 |
| cycloalcanes | | | 53,8 | 45,5 | 0 | 32,7 | 26,9 | 34,3 | 25,0 |

Ces différents diluants ont été testés dans une formulation simple de pâte PVC compacte utilisable dans les revêtements de sol, pour comparer les taux d'utilisation de diluants D1 et D2 selon l'invention à ceux de l'art antérieur, T1, T2 et T3. On utilise comme résine PVC, un LACOVYL PB1704 commercialisé par Arkema à un taux de 100 parties en présence d'un plastifiant de type DINP (diisononylphtalate) à un taux de 40pcr (pcr = pour cent parties de resine PVC) et on prépare des échantillons contenant 0, 2, 4 et 6 pcr de diluant.

On mesure l'évolution de la viscosité mesurée en poises selon la norme EN3219 en fonction du taux de cisaillement de 1 à 1000 s⁻¹ des formules dites « compactes » obtenues après 2 heures puis 24 heures, ces résultats sont rassemblés dans le tableau 2 ci-après.

**TABLEAU 2**

| **temps de stockage** | | **2H** | | | | | | **24H** | | | | | |
|---|---|---|---|---|---|---|---|---|---|---|---|---|---|
| | Taux diluant | 5s⁻¹ | 100s⁻¹ | 250s⁻¹ | 500s⁻¹ | 750s⁻¹ | 1000s⁻¹ | 5s⁻¹ | 100s⁻¹ | 250s⁻¹ | 500s⁻¹ | 750s⁻¹ | 1000s⁻¹ |
| **T1** | 0pcr | 126 | 202 | 188 | 140 | 107 | 89,3 | 118 | 235 | 205 | 154 | 122 | 99,9 |
| | 2 pcr | 81,1 | 131 | 123 | 93,4 | 73,3 | 59,7 | 76,5 | 144 | 132 | 99,6 | 79,8 | 65,1 |
| | 4 pcr | 44,6 | 77,3 | 76,7 | 65,3 | 53,5 | 45 | 44,6 | 77,3 | 76,7 | 65,3 | 53,5 | 45 |
| | 6 pcr | 30,9 | 52,8 | 54,4 | 48 | 41,9 | 36,5 | 30,9 | 55,5 | 56,3 | 49,8 | 43,4 | 37,7 |
| | | | | | | | | | | | | | |
| **T2** | 0 pcr | 130 | 213 | 198 | 145 | 115 | 92,5 | 134 | 261 | 226 | 167 | 133 | 110 |
| | 2 pcr | 95,8 | 151 | 138 | 102 | 78,8 | 64,8 | 90,6 | 165 | 147 | 109 | 83,7 | 66,8 |
| | 4 pcr | 65 | 102 | 95,6 | 76,2 | 60,5 | 50,2 | 59 | 103 | 96,2 | 74 | 59,8 | 51,8 |
| | 6 pcr | 39,8 | 66,3 | 63 | 54,1 | 45,9 | 38,8 | 37,1 | 60,5 | 59,8 | 51,2 | 43,8 | 37,8 |
| | | | | | | | | | | | | | |
| **T3** | 0 pcr | 130 | 211 | 187 | 140 | 110 | 91 | 130 | 250 | 207 | 154 | 122 | 101 |
| | 2 pcr | 105 | 172 | 152 | 109 | 83,7 | 66,1 | 94,5 | 175 | 150 | 109 | 86,7 | 75,7 |
| | 4 pcr | 73,3 | 124 | 113 | 84,4 | 65,2 | 52,3 | 70,2 | 128 | 116 | 86,9 | 66,7 | 53,4 |
| | 6 pcr | 58,8 | 102 | 92,7 | 72,6 | 56,6 | 45,7 | 55,2 | 101 | 90,1 | 69,6 | 55,2 | 46,6 |
| | | | | | | | | | | | | | |
| **D1** | 0 pcr | 139 | 238 | 214 | 156 | 121 | 96,2 | 141 | 266 | 228 | 171 | 131 | 109 |
| | 2 pcr | 120 | 199 | 172 | 122 | 91,4 | 72,2 | 113 | 196 | 166 | 120 | 94,7 | 79,3 |
| | 4 pcr | 85,4 | 138 | 123 | 91,6 | 71,7 | 58,2 | 81,5 | 142 | 124 | 91,3 | 72,8 | 62,2 |
| | 6 pcr | 65,3 | 108 | 97 | 76 | 60 | 49,7 | 65,1 | 111 | 97,4 | 75,3 | 59,4 | 49,9 |
| | | | | | | | | | | | | | |
| **D2** | 0 pcr | 133 | 219 | 195 | 145 | 114 | 94,1 | 117 | 234 | 208 | 157 | 122 | 102 |
| | 2 pcr | 110 | 170 | 154 | 112 | 85,5 | 74,6 | 106 | 190 | 166 | 123 | 96,5 | 79,2 |
| | 4 pcr | 82 | 129 | 117 | 88,1 | 69 | 59,5 | 80,5 | 141 | 125 | 93,6 | 73,6 | 61,6 |
| | 6 pcr | 59,3 | 93,6 | 88,8 | 72,2 | 57,3 | 47,6 | 61,6 | 105 | 96,1 | 76,6 | 61,6 | 51 |

Comparés aux diluants de l'art antérieur, les diluants de l'invention permettent de maintenir les caractéristiques de viscosité des produits finaux attendus après ajustement de leur taux d'utilisation.

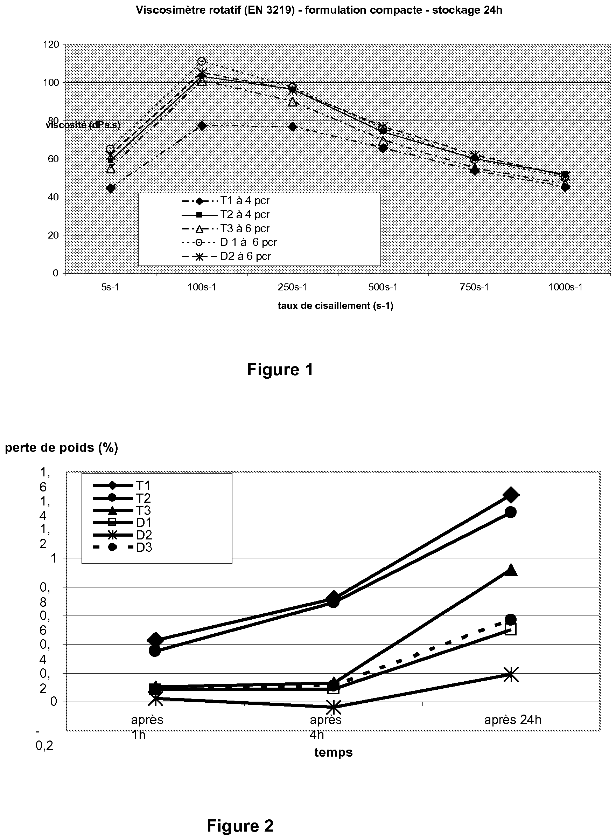

Dans la figure 1, on montre en outre que pour des taux de cisaillement identiques du produit fini après 24 heures de stockage les produits obtenus avec les diluants selon l'invention D1 et D2 ont un comportement rhéologique comparable à ceux obtenus avec les diluants T1, T2 et T3 de l'art antérieur.

En prenant une deuxième formulation de pâte PVC sous forme cellulaire contenant une résine PVC LACOVYL PB1156 commercialisée par Arkema mais contenant 50 pcr de DINP, on a étudié le comportement rhéologique des différentes pâtes préparées avec les mêmes diluants que dans le cas précédent avec les mêmes taux de dilution par des mesures de viscosité de type Brookfield (méthode EN 2555). Les viscosités mesurées sont rassemblées dans le tableau 3 ci-après.

**TABLEAU 3**

| | RHEOLOGIE BROOKFIELD EN 2555 20 tr/min, mobile 6, viscosité en poises | | | | | | | |
|---|---|---|---|---|---|---|---|---|
| Vieillissement | 2H | | | | 24H | | | |
| Taux d'utilisation (pcr) | 0 | 2 | 4 | 6 | 0 | 2 | 4 | 6 |
| **T1** | 88,5 | 56,5 | 44 | 36,5 | 90,5 | 58 | 43 | 40 |
| **T2** | 85 | 65 | 50 | 40 | 75 | 53 | 40 | 32 |
| **T3** | 88 | 75 | 68 | 65 | 78 | 63 | 51 | 45 |
| **D1** | 88 | 70 | 61 | 58 | 77 | 58,5 | 48 | 42 |
| **D2** | 88 | 73 | 68 | 65 | 80 | 63 | 51 | 46 |

L'ensemble de ces résultats nous a permis de calculer et d'extrapoler le taux approximatif complémentaire des diluants selon l'invention à ajouter au produit afin d'obtenir le même profil viscosimétrique qu'avec un diluant de l'art antérieur.

Le tableau 4 rassemble les comparaisons des taux d'utilisation de T2 et T3 comparés à ceux de D1 et D2.

**TABLEAU 4**

| Ti (pcr) | Di/ T3 (pcr) | Di/T2 (pcr) |
|---|---|---|
| 0-3 | + 0,5 | + 1 |
| 4-8 | + 1 | + 2 |
| 9-15 | + 2 | + 4 |

Ainsi, pour obtenir le même profil viscosimétrique que la pâte PVC contenant 6 pcr de T2, il faudra utiliser dans la pâte PVC environ 8 pcr d'un diluant D1 ou D2 selon l'invention. Si on utilise 4 pcr de T3 dans la pâte, il faudra pour obtenir la même viscosité introduire environ 5pcr de D1 ou D2 selon l'invention dans la pâte.

### EXEMPLE 2

Le présent exemple donne une comparaison des performances d'une formulation de pâte PVC utilisant les diluants selon l'invention avec celles utilisant des diluants de l'art antérieur. Cette formulation est celle d'un revêtement de sol contenant des résines PVC commercialisées par ARKEMA. Cette formulation particulière contient :

**TABLEAU 5**

| | | |
|---|---|---|
| Résine PVC | Lacovyl PB1704 | 80 pcr |
| Résine PVC | Lacovyl PS1060 | 20 pcr |
| Plastifiant | famille phtalate | 37 pcr |
| Stabilisant | complexe organométallique* | 2,5 pcr |
| co-stabilisant | base végétale époxydée | 2 pcr |
| diluant à évaluer | T1, T2, T3, D1, D2 | 2-2,5-3pcr ** |

| | | |
|---|---|---|
| * par exemple carboxylate Al, Sn, Ti, Zn ** suivant le diluant afin de garder le même profil viscosimétrique dans tous les cas. | | |

Pour cette formulation, on mesure les caractéristiques de comportement en désaération, la stabilité thermique de la pâte, les propriétés optiques et mécaniques, la volatilité de la pâte à 70°C et enfin les émissions de COV émanant de la pâte.

### Le comportement en désaération

Les échantillons de pâte PVC préparés à partir des différents diluants sont placés sous vide jusqu'à 700mm Hg sous atmosphère contrôlée en température (23°C) et en taux d'hygrométrie (50%). Le volume maximal de mousse formée et le temps pour l'obtenir sont mesurés. Un diluant de référence correspondant à un produit commercial est systématiquement testé en parallèle de chaque diluant afin d'apprécier la variation des résultats. Le tableau 6 ci-après rassemble l'ensemble des résultats obtenus.

**TABLEAU 6**

| **Désignation** | **Réf 1** | **T1** | **Réf 2** | **T2** | **Réf 3** | **T3** | **Réf 4** | **D1** | **Réf 5** | **D2** |
|---|---|---|---|---|---|---|---|---|---|---|
| **taux diluant (pcr)** | **3** | **2** | **3** | **2** | **3** | **2,5** | **3** | **3** | **3** | **3** |
| **Tps à 600 mm/Hg (s)** | **38** | **ND** | **38** | **ND** | **38** | **ND** | **38** | **ND** | **38** | **ND** |
| **Tps à 700 mm/Hg (s)** | **100** | **ND** | **100** | **ND** | **100** | **ND** | **100** | **ND** | **100** | **ND** |
| **Vol à 1 mn30 (ml)** | **180** | **180** | **180** | **190** | **180** | **200** | **190** | **280** | **190** | **210** |
| **Vol max (ml)** | 230 | 220 | 230 | 240 | 230 | 250 | 265 | 320 | 260 | 370 |
| **Tps à vol max (s)** | **105** | **105** | **105** | **105** | **105** | **105** | **115** | **110** | **115** | **120** |

| | | | | | | | | | | |
|---|---|---|---|---|---|---|---|---|---|---|
| ND : non déterminé | | | | | | | | | | |

D'après ce tableau, on constate que le temps nécessaire à l'obtention du volume maximal de mousse est quasiment identique quel que soit le diluant utilisé. Les produits les plus visqueux, D1 et D2 donnent un volume de mousse plus élevé, mais ce volume peut être diminué par l'ajout d'agents spécifiques de débullage ou démoussage bien connus de l'homme du métier.

### Stabilité thermique :

Les pâtes PVC sont appliquées en couches d'une épaisseur de 0,9 mm et introduites dans un four à 200°C (par exemple un four Mathis). On suit l'évolution de l'indice de jaune (Yellow index en anglais) en fonction du temps, pour apprécier la dégradation du PVC. Les résultats sont donnés dans le tableau 7 ci-après.

**TABLEAU 7**

| | **taux diluant (pcr)** | **Yellow index** | | | |
|---|---|---|---|---|---|
| **Temps (min)** | | **1** | **2** | **3** | **4** |
| T1 | 2 | 4,0 | 4,5 | 6,7 | 19,6 |
| T2 | 2 | 3,6 | 4,6 | 7,0 | 21,4 |
| T3 | 2,5 | 3,6 | 5,0 | 6,8 | 22,6 |
| D1 | 3 | 3,6 | 5,0 | 7,5 | 22,2 |
| D2 | 3 | 3,7 | 4,9 | 7,6 | 26,1 |

Ces résultats ne montrent aucune différence significative entre les différents diluants testés.

### Propriétés optiques :

Les pâtes sont appliquées en couche d'une épaisseur de 0,9 mm et placées dans un four Mathis à 200°C pendant 2 minutes, puis on mesure les propriétés optiques de chaque couche au moyen d'un appareil de type Hazemeter selon une méthode basée sur la norme ASTM D1003 pour déterminer les indices de transparence (Transparency) ou T, de trouble (Haze) ou H, ou de clarté (Clarity) ou C, ainsi que l'indice de matité (Matness) ou M selon une méthode basée sur la norme ASTM D523, la matité étant le complément à 100 de la mesure de la brillance (gloss en anglais). L'ensemble des résultats mesurés est rassemblé dans le tableau 8 ci-après.

**TABLEAU 8**

| | **taux diluant (pcr)** | **T** | **H** | **C** | **M** |
|---|---|---|---|---|---|
| T1 | 2 | 90,6 | 43,1 | 23,2 | 50,3 |
| T2 | 2 | 91,9 | 39,2 | 23,2 | 52,7 |
| T3 | 2,5 | 91,7 | 42,7 | 23,5 | 49,3 |
| D1 | 3 | 92,4 | 40,5 | 24,5 | 48,8 |
| D2 | 3 | 92,3 | 39,8 | 20,8 | 49,0 |

Ces résultats ne montrent aucune différence significative entre les différents diluants testés.

### Propriétés mécaniques :

Les pâtes PVC sont appliquées en couche d'une épaisseur de 0,9mm et placées dans un four Mathis à 200°C pendant 2 minutes, puis on mesure les propriétés mécaniques de chaque couche selon la norme ISO R527. Les résultats sont rassemblés dans le tableau 9 ci-après.

**TABLEAU 9**

| | **taux diluant (pcr)** | **Module à 100% (N/mm²)** | **Résistance à la Rupture (N/mm²)** | **Allongement à la rupture (%)** |
|---|---|---|---|---|
| T1 | 2 | 11,5 | 19,8 | 254,9 |
| T2 | 2 | 10,1 | 18,4 | 258,5 |
| T3 | 2,5 | 11,5 | 19,5 | 252,8 |
| D1 | 3 | 11,9 | 19,3 | 254,6 |
| D2 | 3 | 11,9 | 19,4 | 255,4 |

Ces résultats ne montrent aucune différence significative entre les différents diluants testés.

### Volatilité à 70°C :

Les pâtes PVC sont appliquées en couche d'une épaisseur de 0,9mm et placées dans un four Mathis à 70°C pendant 2 minutes, puis on mesure la volatilité en fonction du temps (après 1H, après 4h puis après 24H), la volatilité étant exprimée en perte en masse (en % poids). Les résultats sont rassemblés dans le TABLEAU 10 ci-après.

**TABLEAU 10**

| **perte de masse (%)** | **taux diluant (pcr)** | **après 1h** | **après 4h** | **après 24h** |
|---|---|---|---|---|
| T1 | 2 | 0,43 | 0,75 | 1,44 |
| T2 | 2 | 0,35 | 0,69 | 1,32 |
| T3 | 2,5 | 0,1 | 0,13 | 0,92 |
| D1 | 3 | 0,08 | 0,09 | 0,50 |
| D2 | 3 | 0,02 | -0,04 | 0,19 |
| D3 | 3 | 0,08 | 0,11 | 0,57 |

Ces résultats ont été rapportés dans le diagramme de la figure 2. On observe une diminution notable des composés les plus volatils en utilisant les diluants D1, D2 et D3 selon l'invention par rapport à l'utilisation de diluants classiques T1, T2 et T3.

### Emissions de COV :

Quatre échantillons de revêtement de sol de même composition, correspondant à des pâtes PVC contenant respectivement des diluants T2, D1, D2 et D3 ont été préparés sur une ligne d'enduction dans les conditions opératoires suivantes : température 200°C pendant 2 minutes, épaisseur de la couche 0,9 mm, et taux identique de diluant pour les quatre diluants testés soit 3 pcr. Les échantillons ont été testés selon la norme ISO 16000-9 dans les conditions ci-après :

**TABLEAU 11**

| Emission COV (µg/m3) | **AgBB** | **Afsset** | **T2** | **D1** | **D2** | **D3** |
|---|---|---|---|---|---|---|
| COV totaux (C6-C16) après 3 jours | <10000 | <10000 | 9381 | 819 | 462 | 768 |
| substances carcinogéniques après 3 jours | <10 | <10 | Non détecté | Non détecté | Non détecté | Non détecté |
| COV totaux (C6-C16) après 28 jours | <1000 | <1000 | 799 | 90 | <162 | 77 |
| SVOC (C16-C22) après 28 jours | <100 | - | 0 | 13,4 | 0 | 30,6 |
| substances carcinogéniques après 28 jours | <1 | <1 | Non détecté | Non détecté | Non détecté | Non détecté |
| R selon AgBB | <1 | - | 0,15 | 0,025 | 0,15 | 0,025 |
| R selon Afsset | - | <1 | 0,05 | 0,023 | 0,05 | 0,022 |
| Substances non identifiées après 28 jours | <100 | - | **391** | 0 | 0 | 0 |

Les COV émis sont prélevés en sortie de chambre par adsorption sur des cartouches de type TENAX, les composés chimiques retenus sont ensuite récupérés par désorption chimique puis concentrés sur piège cryogénique avant injection sur une colonne capillaire de chromatographie gazeuse. Les COV sont ainsi séparés par chromatographie gaz au moyen d'une colonne capillaire. La détection, l'identification et la quantification des composés organiques sont réalisées au moyen d'un spectromètre de masse connecté à la sortie de la colonne de chromatographie, selon la norme ISO 16000-6.

Les résultats obtenus, rassemblés dans le tableau 12 ci-après, ont ensuite été comparés aux limites des schémas de réduction des COV prévus dans les protocoles AgBB du 1er mars 2008 et Afsset d'octobre 2006.

**TABLEAU 12**

| Emission COV (µg/m3) | **AgBB** | **Afsset** | **T2** | **D1** | **D2** | **D3** |
|---|---|---|---|---|---|---|
| COV totaux (C6-C16) après 3 jours | <10000 | <10000 | 9381 | 819 | 462 | 768 |
| substances carcinogéniques après 3 jours | <10 | <10 | Non détecté | Non détecté | Non détecté | Non détecté |
| COV totaux (C6-C16) après 28 jours | <1000 | <1000 | 799 | 90 | <162 | 77 |
| SVOC (C16-C22) après 28 jours | <100 | - | 0 | 13,4 | 0 | 30,6 |
| substances carcinogéniques après 28 jours | <1 | <1 | Non détecté | Non détecté | Non détecté | Non détecté |
| R selon AgBB | <1 | - | 0,15 | 0,025 | 0,15 | 0,025 |
| R selon Afsset | - | <1 | 0,05 | 0,023 | 0,05 | 0,022 |
| Substances non identifiées après 28 jours | <100 | - | **391** | 0 | 0 | 0 |

Les échantillons formulés à base des diluants D1, D2 et D3 selon l'invention respectent les exigences des protocoles AgBB et Afsset alors que celui utilisant le diluant T2 de l'art antérieur n'est pas conforme aux exigences du schéma AgBB en terme de substances non identifiés après 28 jours, et la mesure des COV totaux s'avère très proche de la limite AgBB ou Afsset.

Le présent exemple a donc bien montré que les diluants selon l'invention permettent de préparer des pâtes PVC et même des revêtements de sols qui présentent les mêmes propriétés physiques que les produits utilisés antérieurement tout en ne présentant pas l'inconvénient de fortes émissions de COV.

### EXEMPLE 3

Dans le présent exemple, on décrit l'utilisation de diluants selon l'invention dans les mastics silicones, particulièrement dans les mastics silicones RTV-1 (Room Temperature Vulcanisable - 1 component ou en français : mastics réticulables à température ambiante - mono composant).

Dans le tableau ci-après est donnée la composition typique de ce type de mastic :

| | |
|---|---|
| Polymère silicone | 51,15% |
| Plastifiant | 34,10% |
| huile silicone | qsp |
| solvant hydrocarboné | HC% |
| Agent de réticulation | 4,74% |
| silice | 10,00% |
| catalyseur | 0,01% |

Dans cette composition, le rapport polymère/plastifiant est de 1,5/1 et la somme solvant hydrocarboné (HC%) + huile silicone (qsp) est égale à 34,1% poids.

Dans le tableau 13 ci-après on fait varier la quantité de solvant hydrocarboné ou HC jusqu'à la limite de compatibilité avec le polymère et on mesure la perte de volume selon la norme ISO 10563 (après 7 jours à 70°C), cette perte de volume est liée à l'évaporation des fractions les plus légères des plastifiants et ingrédients utilisés dans la formulation en incluant notamment les COV. Plus il y a de composés COV dans le mélange plus la perte de volume est importante.

**TABLEAU 13**

| | Teneur en HC | | | | | |
|---|---|---|---|---|---|---|
| Solvant Hydrocarboné | 0% | 10% | 15% | 20% | 30% | 40% |
| D2 | 3,3 | 4,5 | 5,1 | | | |
| Hydroseal G400H | 3,3 | 9,8 | 12,2 | 15,1 | | |
| Hydroseal G3H | 3,3 | 14,4 | 19,3 | 24,4 | 34 | 44,7 |
| Hydroseal G250H | 3,3 | 16 | 20,8 | 25,9 | 37,2 | 47,5 |

Dans ce tableau, les gazoles Hydroseal sont des références commerciales actuellement utilisées dans la profession

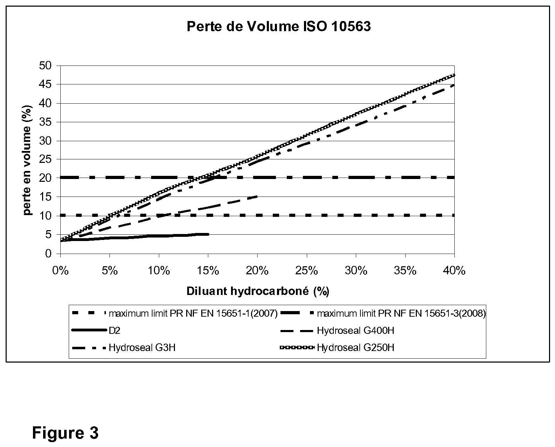

Dans la figure 3 sont représentées les pertes en volume par évaporation et le positionnement des produits selon le projet de spécification PR NF EN 15651-3 (2008) : mastics sanitaires et PR NF EN 15651-1 (2007) : mastics pour façade.

Jusqu'à sa limite de compatibilité, ici entre 15 et 20%, le produit D2 présente des résultats très favorables car il montre une moindre perte en volume par évaporation que les produits actuellement commercialisés. Il permet ainsi de respecter la limite maximale de 10% de perte en volume prévue selon la norme PR NF EN 15651-1 (2007) : mastics pour façade, en remplaçant jusqu'à 15% en poids d'huile silicone alors que les diluants standards ne permettent qu'un remplacement inférieur : environ 5% pour les Hydroseal G250H et G3H, environ 10% pour Hydroseal G400H, cette substitution plus importante permet de réduire le coût de la formulation.

### EXEMPLE 4

Dans le présent exemple, on décrit l'utilisation de diluants selon l'invention dans les adhésifs siliconés, notamment pour une application d'adhésifs pour parquet contenant la technologie polymères silanes modifiés. Il concerne plus particulièrement les ST-PU (silane terminated - Poly urethane) ou polyurethane à terminaison silane.

Le tableau 14 compare deux formulations : l'une incluant un plastifiant exclusivement de type DPHP (Di 2-propyl hepthyl phtalate), l'autre contenant un système de plastifiants où le DPHP a été partiellement remplacé par le diluant D2 au sens de notre invention.

**TABLEAU 14**

| Composition (%wt) | Phtalate | D2 |
|---|---|---|
| Polymère ST-PU | 24.5 | 24.5 |
| Plastifiant | | |
| -DPHP Di 2-Propyl Heptyl Phtalate | 15 | 9 |
| - D2 | | 6 |
| promoteur d'adhésion (organo silane) | 1.5 | 1.5 |
| agent de séchage (dérivé silane) | 1.8 | 1.8 |
| charge minérale (carbonate de calcium) | 56 | 56 |
| Agent de Rheologie | 1 | 1 |
| Sn organique (catalyseur) | 0.2 | 0.2 |

Ces formulations ont été évaluées dans l'essai d'émission des COV prévu dans le référentiel EMICODE proposé par le GEV (Gemeinschaft Emissionskontrollierte Verlegewerkstoffe, qui veut dire :«l'Association pour la lutte contre les émissions dans les produits de revêtements de sol et dans leur installation").

On remarquera dans le tableau 15 ci-après que l'utilisation du diluant D2 permet d'abaisser l'émission totale des COV par rapport à la formulation basée sur le plastifiant de type phtalate et permet l'obtention du label EMICODE EC 1.

Résultats des essais d'émissions tels que prévus dans le référentiel GEV - EMICODE :

**TABLEAU 15**

| Résultats | Phtalate | D2 |
|---|---|---|
| TVOC GEV | 150 | 80 |
| TVVOC (ISO 16000-6) | <20 | <20 |
| TVOC (ISO 16000-6) | 150 | 80 |
| TSVOC (ISO 16000-6) | <20 | <20 |
| 10 Composés dominants | | |
| - Diethylèneglycol | 29 | 63 |
| - Non identifié | 130 | 57 |
| - No. 3-10 non applicable | <20 | <20 |
| TVOC ; émissions après 10 jours en dessous de 500µg/m³ | Emicode EC1 : OK | Emicode EC1 : OK |

## Revendications

1. Composition de polymère ou de résine diluée comprenant:
a) un diluant hydrocarboné pour dilution de polymère, de point d'écoulement inférieur à -15°C selon la norme ASTM D97, de température d'ébullition comprise entre 280 et 450°C, comprenant plus de 50% en poids d'isoparaffines et de 20% à 40% en poids au plus de naphtènes, ledit diluant étant constitué d'un mélange d'hydrocarbures de températures d'ébullition comprises entre 280 et 450°C, obtenu par distillation de coupes gazoles hydrodéparaffinées d'origine fossile
b) un polymère dilué ou une résine diluée, ledit polymère ou ladite résine étant choisi(e) dans le groupe consistant en une résine de polychlorure de vinyle (PVC), les mastics, les adhésifs à base de silicone et les polymères silicones modifiés.

2. Composition selon la revendication 1, dans laquelle la viscosité du diluant est supérieure à 5 mm²/s à 40°C, et de préférence supérieure à 7 mm²/s à 40°C, selon la norme ASTM D445.

3. Composition selon l'une des revendications précédentes, **caractérisé en ce que** le diluant est issu de l'hydrodéparaffinage de différentes coupes gazoles obtenues par distillation atmosphérique, distillation sous vide, hydrotraitement, hydrocraquage, craquage catalytique et/ou viscoréduction, éventuellement après traitement de désulfuration et/ou de désaromatisation complémentaire.

4. Composition selon l'une des revendications précédentes, **caractérisé en ce que** le diluant est issu d'une coupe de distillation d'hydrocarbures hydroparaffinés de point d'écoulement selon la norme ASTM D97 inférieur à -30°C et de point éclair supérieur à 140°C.

5. Composition selon l'une des revendications précédentes, **caractérisé en ce que** le diluant comprend de 20 à 35% en poids de naphtènes et plus de 60% en poids d'isoparaffines.

6. Composition selon l'une des revendications précédentes, **caractérisé en ce que** le diluant comprend plus de 65 % en poids d'isoparaffines et moins de 10 % en poids de normales paraffines.

7. Composition selon l'une des revendications précédentes, **caractérisé en ce que** le diluant comprend moins de 65% en poids d'hydrocarbures ayant une longueur de chaîne comprise entre 16 et 22 atomes de carbone, et plus de 30% en poids d'hydrocarbures ayant une longueur de chaîne supérieure à 22 atomes de carbone, de préférence de chaîne comprise entre C22 et C30.

8. Composition -selon l'une des revendications précédentes, **caractérisé en ce que** le diluant comprend moins de 50% en poids d'hydrocarbures ayant une longueur de chaîne comprise entre 16 et 22 atomes de carbone, et plus de 40% en poids d'hydrocarbures ayant une longueur de chaîne supérieure à 22 atomes de carbone, de préférence de chaîne comprise entre C22 et C30.

9. Composition selon l'une des revendications précédentes, **caractérisé en ce que** le diluant est dépourvu de normales paraffines.

10. Composition -selon l'une des revendications précédentes, **caractérisé en ce que** la teneur en soufre du diluant est inférieure à 10 ppm, de préférence inférieure à 2 ppm.

11. Composition selon l'une des revendications précédentes, **caractérisé en ce que** le diluant contient moins de 500 ppm d'aromatiques déterminés par spectrométrie UV.

12. Composition selon l'une des revendications précédentes, dans laquelle le diluant est en combinaison avec au moins un diluant du groupe constitué par les acides et esters d'acides gras de chaînes carbonées de plus de 16 atomes de carbone, des coupes de type gazole hydrocraquées et/ou hydrotraitées de point d'ébullition compris entre 200 et 450°C, notamment entre 280 et 450°C.

13. Composition selon la revendication précédente, **caractérisée en ce que** le mélange de diluants comprend plus de 50% en poids d'isoparaffines et moins de 20% en poids de normales paraffines, de préférence plus de 60% en poids d'isoparaffines et moins de 10% en poids de normales paraffines.

14. Composition selon les revendications 12 ou 13, **caractérisée en ce que** le mélange de diluants comprend plus de 40 % en poids de diluant hydrodéparaffiné, de préférence plus de 60% en poids.

15. Utilisation de la composition selon l'une des revendications 1 à 11, le diluant étant seul ou en combinaison avec au moins un diluant du groupe constitué par les acides et esters d'acides gras de chaînes carbonées de plus de 16 atomes de carbone, des coupes de type gazole hydrotraitées et/ou hydrocraquées de point d'ébullition compris entre 200 et 450°C, notamment entre 280 et 450°C, dans des adhésifs, des revêtements de sols, des papiers peints.

## Patentansprüche

1. Verdünnte Polymer- oder Harzzusammensetzung, umfassend:
a) ein Kohlenwasserstoffverdünnungsmittel zur Verdünnung von Polymeren, mit einem Stockpunkt der gemäß der Norm ASTM D97 niedriger als -15°C ist, einer Siedetemperatur die zwischen 280 und 450°C liegt, das über 50 Gewichts-% Isoparaffine und höchstens 20 bis 40 Gewichts-% Naphtene umfasst, wobei das Verdünnungsmittel aus einer Mischung von Kohlenwasserstoffen mit Siedetemperaturen im Bereich von 280 und 450°C besteht, die durch Destillation von hydroentparaffinierten Gasölschnitten fossilem Ursprungs erhalten wird.
b) ein verdünntes Polymer oder ein verdünntes Harz, wobei das Polymer oder das Harz aus der Gruppe bestehend aus einem Polyvinylchloridharz (PVC), Kitte, Silikonklebestoffen, und modifizierten Silikonpolymeren ausgewählt sind.

2. Zusammensetzung nach Anspruch 1, wobei die Viskosität des Verdünnungsmittels, gemäß der Norm ASTM D445, höher als 5 mm²/s bei 40°C und, vorzugsweise höher als 7 mm²/s bei 40°C ist.

3. Zusammensetzung nach einem der vorhergehenden Ansprüche, **dadurch gekennzeichnet, dass** das Verdünnungsmittel aus Hydroentparaffinierung verschiedener Gasölschnitte entsteht, die durch atmosphärische Destillation, Vakuumdestillation, Hydrobehandlung, Hydrokracken, katalytisches Kracken und/oder Visbreaking erhalten sind, eventuell nach Entschwefelungsbehandlung und/oder zusätzlicher Entaromatisierung.

4. Zusammensetzung nach einem der vorhergehenden Ansprüche, **dadurch gekennzeichnet, dass** das Verdünnungsmittel aus einem Destillationschnitt von hydroparaffinierten Kohlenwasserstoffen entsteht, mit einem Stockpunkt gemäß der Norm ASTM D97, der niedriger als -30°C ist und einen Flammpunkt oberhalb von 140°C aufweist.

5. Zusammensetzung nach einem der vorhergehenden Ansprüche, **dadurch gekennzeichnet, dass** das Verdünnungsmittel 20 bis 35 Gewichts-% Naphtene und über 60 Gewichts-% Isoparaffine umfasst.

6. Zusammensetzung nach einem der vorhergehenden Ansprüche, **dadurch gekennzeichnet, dass** das Verdünnungsmittel über 65 Gewichts-% Isoparaffine und weniger als 10 Gewichts-% Normalparaffine umfasst.

7. Zusammensetzung nach einem der vorhergehenden Ansprüche, **dadurch gekennzeichnet, dass** das Verdünnungsmittel weniger als 65 Gewichts-% Kohlenwasserstoffe mit einer, im Bereich von 16 und 22 Kohlenstoffatomen liegenden Kettenlänge, und über 30 Gewichts-% Kohlenwasserstoffe mit einer Kettenlänge von über 22 Kohlenstoffatomen umfasst, vorzugsweise eine im Bereich von C22 und C30 liegende Kette.

8. Zusammensetzung nach einem der vorhergehenden Ansprüche, **dadurch gekennzeichnet, dass** das Verdünnungsmittel weniger als 50 Gewichts-% Kohlenwasserstoffe, mit einer im Bereich von 16 und 22 Kohlenstoffatomen liegenden Kettenlänge, und über 40 Gewichts-% Kohlenwasserstoffe mit einer Kettenlänge von über 22 Kohlenstoffatomen umfasst, vorzugsweise eine im Bereich von C22 und C30 liegende Kette.

9. Zusammensetzung nach einem der vorhergehenden Ansprüche, **dadurch gekennzeichnet, dass** das Verdünnungsmittel frei von Normalparaffinen ist.

10. Zusammensetzung nach einem der vorhergehenden Ansprüche, **dadurch gekennzeichnet, dass** der Schwefelgehalt des Verdünnungsmittels unter 10 ppm, vorzugsweise unter 2 ppm liegt.

11. Zusammensetzung nach einem der vorhergehenden Ansprüche, **dadurch gekennzeichnet, dass** das Verdünnungsmittel weniger als 500 ppm von, durch UV-Spektrometrie festgesetzten Aromaten enthält.

12. Zusammensetzung nach einem der vorhergehenden Ansprüche, wobei das Verdünnungsmittel mit mindestens einem Verdünnungsmittel aus der Gruppe bestehend aus den Fettsäuren und den Fettsäureestern von Kohlenstoffketten mit über 16 Kohlestoffatomen, den hydrogekrackten und/oder hydrobehandelten Gasölschnitten mit einem, im Bereich von 200 und 450°C, insbesondere von 280 und 450°C liegenden Siedepunkt kombiniert ist.

13. Zusammensetzung nach einem der vorhergehenden Ansprüche, **dadurch gekennzeichnet, dass** das die Mischung von Verdünnungsmitteln über 50 Gewichts-% Isoparaffine und weniger als 20 Gewichts-% Normalparaffine, vorzugsweise über 60 Gewichts-% Isoparaffine und weniger als 10 Gewichts-% Normalparaffine umfasst.

14. Zusammensetzung nach einem der vorhergehenden Ansprüche, **dadurch gekennzeichnet, dass** die Mischung von Verdünnungsmitteln über 40 Gewichts-%, vorzugsweise über 60 Gewichts-% von hydroentparaffiniertem Verdünnungsmitteln umfasst.

15. Verwendung einer Zusammensetzung nach einem der Ansprüche 1 bis 11, wobei das Verdünnungsmittel allein oder mit mindestens einem Verdünnungsmittel aus der Gruppe bestehend aus den Fettsäuren und den Fettsäureestern der Kohlenstoffketten von über 16 Kohlestoffatomen, den hydrobehandelten und/oder hydrogekrackten Gasölschnitten mit einem, im Bereich von 200 und 450°C, insbesondere von 280 und 450°C liegenden Siedepunkt, in Klebstoffen, Bodenbelägen, Tapeten kombiniert ist.

## Claims

1. A composition of diluted polymer or diluted resin comprising:
a) a hydrocarbon diluent for dilution of polymer, with a pour point below -15°C according to ASTM standard D97, with a boiling point comprised between 280 and 450°C, comprising more than 50% by weight of isoparaffins, and naphthenes from 20% to up to at most 40% by weight, said diluent being constituted by a mixture of hydrocarbons with a with a boiling point comprised between 280 and 450°C, obtained by distillation of hydrodewaxed gas-oil cuts of fossil origin,
b) a diluted polymer or diluted resin, said polymer or said resin being selected from the group consisting of a polyvinyl chloride (PVC) resin, mastics, silicone-based adhesives and modified silicone polymers.

2. Composition according to claim 1, in which the viscosity of the diluent is greater than 5 mm²/s at 40°C, and preferably greater than 7 mm²/s at 40°C, according to ASTM standard D445.

3. Composition according to one of the preceding claims, **characterized in that** the diluent is derived from the hydrodewaxing of various gas-oil cuts obtained by atmospheric distillation, vacuum distillation, hydrotreating, hydrocracking, catalytic cracking and/or visbreaking, optionally after an additional treatment of desulphurization and/or removal of aromatics.

4. Composition according to one of the preceding claims, **characterized in** the diluent is derived from a distillation cut of hydrodewaxed hydrocarbons with a pour point according to ASTM standard D97 below -30°C and with a flash point above 140°C.

5. Composition according to one of the preceding claims, **characterized in** the diluent comprises from 20 to 35% by weight of naphthenes and more than 60% by weight of isoparaffins.

6. Composition according to one of the preceding claims, **characterized in that** the diluent comprises more than 65% by weight of isoparaffins and less than 10% by weight of normal paraffins.

7. Composition according to one of the preceding claims, **characterized in** the diluent comprises less than 65% by weight of hydrocarbons having a chain length comprised between 16 and 22 carbon atoms, and more than 30% by weight of hydrocarbons having a chain length greater than 22 carbon atoms, preferably having a chain length comprised between C22 and C30.

8. Composition according to one of the preceding claims, **characterized in** the diluent comprises less than 50% by weight of hydrocarbons having a chain length comprised between 16 and 22 carbon atoms, and more than 40% by weight of hydrocarbons having a chain length greater than 22 carbon atoms, preferably having a chain length comprised between C22 and C30.

9. Composition according to one of the preceding claims, **characterized in** the diluent is devoid of normal paraffins.

10. Composition according to one of the preceding claims, **characterized in that** the sulphur content of the diluent is less than 10 ppm, preferably less than 2 ppm.

11. Composition according to one of the preceding claims, **characterized in that** the diluent contains less than 500 ppm of aromatics determined by UV spectrometry.

12. Composition according to one of the preceding claims in which the diluent is in combination with at least one diluent from the group constituted by acids and esters of fatty acids with carbon chains with more than 16 carbon atoms, cuts of the hydrocracked and/or hydrotreated gas-oil type with a boiling point comprised between 200 and 450°C, in particular comprised between 280 and 450°C.

13. Composition according to the preceding claim, **characterized in that** the mixture of diluents comprises more than 50% by weight of isoparaffins and less than 20% by weight of normal paraffins, preferably more than 60% by weight of isoparaffins and less than 10% by weight of normal paraffins.

14. Composition according to claims 12 or 13, **characterized in that** the mixture of diluents comprises more than 40% by weight of hydrodewaxed diluent, preferably more than 60% by weight.

15. Use of the composition according to one of claims 1 to 11, the diluent being alone or in combination with at least one diluent from the group consisting of acids and esters of fatty acids with carbon chains with more than 16 carbon atoms, hydrotreated and/or hydrocracked cuts of the gas-oil type with a boiling point comprised between 200 and 450°C, in particular comprised between 280 and 450°C, in adhesives, floor coverings, wallpapers.
